# EUROPÄISCHE PATENTSCHRIFT

(11) **EP 2 495 061 B1**
(45) Veröffentlichungstag und Bekanntmachung des Hinweises auf die Patenterteilung: **18.09.2013**
(21) Anmeldenummer: 12154914.1
(22) Anmeldetag: 10.02.2012
(51) Int. Cl.: B23D 61/02, B23D 65/00

(54) **Sägeblatt**
Saw blade
Lame de scie

(30) Priorität: 01.03.2011 DE 102011012690
(43) Veröffentlichungstag der Anmeldung: 05.09.2012
(73) Patentinhaber: AKE Knebel GmbH & Co. KG, 72336 Balingen (DE)
(72) Erfinder: Knebel, Alexander, 72336 Balingen (DE)
(74) Vertreter: Kohler Schmid Möbus

(56) Entgegenhaltungen:
- CH-A- 452 871
- DE-A1- 3 915 492
- JP-A- 4 002 410

## Beschreibung

Die Erfindung betrifft ein Sägeblatt zum Sägen von Baustoffen mit zumindest einem Stammblatt und einem Schneidelement, wobei das Schneidelement durch eine Klebeverbindung am Stammblatt befestigt ist.

Es ist bekannt, Sägeblätter zum Sägen von Baustoffen, insbesondere von Dämmmaterialien, einzusetzen. Das Sägen von Dämmstoffen hat in der Regel eine sehr abrasive Wirkung. Die Schneidelemente der Sägeblätter müssen daher oftmals ersetzt werden.

Die Schneidelemente sind in Form von Streifen ausgebildet, in die Zähne geschliffen sind. Gemäß dem Stand der Technik werden diese Schneidelemente durch großflächige Lötungen mit dem Stammblatt verbunden. Dazu werden Hartlotverfahren bei circa 750 °C eingesetzt. Da das Material des Stammblatts, insbesondere im Falle von Stahl, und das Material der Schneidelemente, insbesondere im Falle von Hartmetall, unterschiedliche Ausdehnungskoeffizienten aufweisen können, besteht die Gefahr, dass beim Verlöten große Spannungen entstehen.

Anstelle von Lötverbindungen werden daher mittlerweile oftmals Klebeverbindungen eingesetzt. Die DE 26 06 598 A1 offenbart ein Sägeblatt, bei dem Schneidelemente über eine Nut-Feder-Verbindung am Umfangsrand des Stammblatts festgeklebt sind. Eine Nut-Feder-Verbindung ist allerdings aufwändig zu fertigen.

Die CH 452 871 A offenbart ein Sägeblatt mit einem Stammblatt und einem Schneidelement, wobei das Schneidelement durch eine Klebeverbindung am Stammblatt befestigt ist.

Die JP 4002410 A offenbart ein Sägeblatt, bei dem das Sägeblatt im Umfangsbereich C-förmig ausgestaltet ist. Die Schneiden weisen ebenfalls eine komplementäre C-Form auf und können auf das Sägeblatt aufgeschoben werden.

Der Erfindung liegt demgegenüber die Aufgabe zugrunde, ein Sägeblatt bereitzustellen, bei dem das zumindest eine Schneidelement auf sichere und gleichzeitig einfache Art und Weise am Stammblatt befestigt werden kann.

Diese Aufgabe wird erfindungsgemäß durch ein Sägeblatt zum Sägen von Baustoffen mit zumindest einem Stammblatt und einem Schneidelement, wobei das Schneidelement durch eine Klebeverbindung am Stammblatt befestigt ist, gelöst, wobei das Schneidelement an einer Schneidelementseitenfläche mittels der Klebeverbindung an einer Stammblattseitenfläche, insbesondere im Bereich des Umfangsrands des Stammblatts, aufgeklebt ist und die Stammblattseitenfläche und/oder die Schneidelementseitenfläche im Bereich der Klebeverbindung zumindest einen Klebevorsprung zur Ausbildung eines definierten Abstandes zwischen der Stammblattseitenfläche und der Schneidelementseitenfläche aufweist.

Da das zumindest eine-Schneidelement an einer Seitenfläche des Stammblatts aufgeklebt wird, ist die Fertigung des Sägeblatts denkbar einfach. Insbesondere kann auf die Ausbildung einer Nut-Feder-Verbindung verzichtet werden. Weiterhin wird die Festigkeit und Zuverlässigkeit der Klebeverbindung dadurch erhöht, dass zumindest ein Klebevorsprung zur Ausbildung eines definierten Abstandes zwischen der Stammblattseitenfläche und der Schneidelementseitenfläche vorgesehen ist. Der Klebevorsprung kann jede beliebige Form aufweisen. Der Klebevorsprung kann insbesondere als ringförmige Zone mit ein oder mehreren ringförmigen Erhebungen oder in Form kreislinienförmiger Erhebungen ausgebildet sein. Der zumindest eine Klebevorsprung dient dabei als Abstandshalter zwischen der Stammblattseitenfläche und der Schneidelementseitenfläche, sodass die beiden Seitenflächen bis auf einen, durch den Klebevorsprung definierten Abstand zusammengepresst werden. Durch den definierten Abstand wird eine definierte Klebstoffdicke gewährleistet. Das Schneidelement kann dadurch sicher am Stammblatt befestigt werden. Sind mehrere Schneidelemente an einem Stammblatt befestigt, kann durch die konstante Klebstoffdicke eine über das gesamte Sägeblatt gleichbleibende Gesamtdicke aus Stammblatt und Schneidelementen und dadurch eine über das gesamte Sägeblatt gesehen gleichmäßige Schnittbreite des Sägeblatts erzielt werden.

Vorzugsweise weisen sowohl das Schneidelement als auch das Stammblatts zumindest einen Klebevorsprung auf, wobei der Klebevorsprung als radiale Sicherung vor einem "Abschleudern" durch die auf das Schneidelement wirkenden Fliehkräfte dient und die Klebevorsprünge sich gegenseitig hintergreifen. Die Klebevorsprünge sind dabei vorzugsweise so angeordnet, dass sie sich gegenseitig berühren.

Der Klebevorsprung weist vorzugsweise eine Höhe von 0,1 mm bis 1,5 mm auf. Die Höhe des Klebevorsprungs kann dabei basierend auf der Viskosität des eingesetzten Klebstoffs gewählt werden. Je größer die

Viskosität des Klebstoffs ist, umso höher wird der Klebevorsprung vorzugsweise gewählt.

In bevorzugter Ausgestaltung der Erfindung können insgesamt drei Klebevorsprünge im Bereich der Klebeverbindung vorgesehen sein. Im Falle dreier Klebevorsprünge liegen die Seitenflächen immer auf allen drei Auflagepunkten, d. h. auf allen drei Klebevorsprüngen auf. Ein Verkippen oder Verkanten des Schneidelements ist in diesem Fall nicht möglich. Die Seitenflächen der Schneidelemente und des Stammblatts sind somit stets parallel zueinander angeordnet.

Das Stammblatt und/oder das Schneidelement können im Bereich der Klebeverbindung eine Abstufung aufweisen. Durch die Abstufung kann die Gesamtdicke der Kombination aus Stammblatt und Schneidelement, d. h. die Gesamtdicke des Sägeblatts, verringert werden.

In einem besonders bevorzugten Ausführungsbeispiel der Erfindung entspricht die Tiefe der Abstufung etwa der halben Stammblattdicke in einem Bereich außerhalb des Bereichs der Klebeverbindung. Die Tiefe der Abstufung des Schneidelements entspricht ebenfalls vorzugsweise etwa der halben Schneidelementdicke in einem Bereich außerhalb des Bereichs der Klebeverbindung. Die Abstufungen können dabei ringförmig ausgebildet sein.

Die Stammblattdicke in einem Bereich außerhalb des Bereichs der Klebeverbindung entspricht vorzugsweise der Schneidelementdicke in einem Bereich außerhalb des Bereichs der Klebeverbindung. Die Schneidelemente können dabei, senkrecht zur Ebene des Sägeblatts gesehen, einseitig oder beidseitig über das Stammblatt überstehen.

Besonders bevorzugt entspricht die Stammblattdicke in einem Bereich außerhalb des Bereichs der Klebeverbindung der Schneidelementdicke in einem Bereich außerhalb des Bereichs der Klebeverbindung und sowohl die Tiefe der Abstufung des Stammblatts als auch die Tiefe der Abstufung des Schneidelements der halben Stammblattdicke in einem Bereich außerhalb des Bereichs der Klebeverbindung. Die Kombination aus Stammblatt und Schneidelement kann so einerseits besonders stabil ausgebildet werden und andererseits über das gesamte Sägeblatt hinweg gesehen eine gleiche Gesamtdicke aufweisen.

Um das Schneidelement vor einem "Abschleudern" durch die an dem Schneidelement wirkenden Fliehkräfte während des Sägens zu sichern, kann an der Stammblattseitenfläche weiterhin zumindest eine Stammblattvertiefung ausgebildet sein, in die ein an der Schneidelementseitenfläche ausgebildeter Schneidelementvorsprung eingreift und/oder an der Schneidelementseitenfläche zumindest eine Schneidelementvertiefung ausgebildet sein, in die ein an der Stammblattseiten-fläche ausgebildeter Stammblattvorsprung eingreift. Die Verbindung aus Vertiefung und Vorsprung bildet dabei eine zusätzliche radiale Sicherung des Schneidelements. Es können ein oder mehrere Vertiefungen und/oder Vorsprünge am Stammblatt und/oder Schneidelement vorgesehen sein. Die Stammblattvertiefung und/oder die Schneidelementvertiefung sind vorzugsweise in Form von Nuten ausgebildet. Nuten können besonders einfach in die Seitenflächen des Stammblatts und/oder Schneidelements eingebracht werden. Die Stammblattvorsprünge und/oder Schneidelementvorsprünge sind in diesem Fall vorzugsweise streifenförmig ausgebildet.

Darüber hinaus kann das Sägeblatt durch die Verbindung aus Nut und Vorsprung einen geringen Rundlauffehler aufweisen, da der Höhenversatz der einzelnen Schneidelemente zueinander minimiert werden kann.

Die Schneidelementnut und/oder die Stammblattnut sind vorzugsweise als durchgängige Ringnut ausgebildet. Beispielsweise kann an dem Stammblatt eine durchgängige, einfach herstellbare Ringnut ausgebildet sein, in der Schneidelementvorsprünge mehrerer Schneidelemente eingreifen.

Vorzugsweise weist das Stammblatt mehrere, gleichmäßig im Umfangsbereich des Stammblatts angeklebte Schneidelemente auf. Zur Befestigung der Schneidelemente kann eine Klebefläche in Form einer ringförmigen Zone im Umfangsbereich ausgebildet sein. Im Falle mehrerer Schneidelemente kann ein ruhiger Lauf des Sägeblatts erreicht werden.

Die Schneiden der Schneidelemente können ein- oder beidseitig planparallel zur Sägeblattebene ausgeführt sein oder ein- oder beidseitig mit Hinterschliffen, Freiflächen oder sonstigen Absätzen und Verjüngungen in radialer Ausrichtung und/oder parallel zur Sägeblattebene versehen sein. Hierdurch sind gleichmäßig oder unregelmäßig ausgeformte und damit beliebig variierbare seitliche Freiflächen und Freiflächenwinkel möglich.

Ein Verfahren zur Herstellung eines Sägeblatts aus einem Stammblatt und zumindest einem Schneidelement umfasst ein Auftragen von Klebstoff zur

Ausbildung einer Klebeverbindung auf eine Stammblattseitenfläche im Bereich des Umfangsrands des Stammblatts und/oder auf eine Schneidelementseitenfläche sowie ein Fixieren des zumindest einen Schneidelements auf der Stammblattseitenfläche, insbesondere durch einen Ring oder eine Platte.

Der Klebstoff muss lediglich auf eine Stammblattseitenfläche und/oder auf eine Schneidelementseitenfläche aufgetragen werden. Es versteht sich allerdings, dass der Klebstoff auch sowohl auf die Stammblattseitenfläche als auch auf die Schneidelementseitenfläche aufgetragen werden kann. Die Stammblattseitenfläche und/oder die Schneidelementseitenfläche sind dabei einfach zugänglich. Auch das Fixieren des zumindest einen Schneidelements auf der Stammblattseitenfläche stellt einen einfachen, kostengünstig durchführbaren Vorgang dar, da das Stammblatt auf eine ebene Fläche gelegt werden kann und das Schneidelement, insbesondere durch einen Ring oder durch eine Platte, durch Auflegen eines Gewichts fixiert werden kann. Besondere Vorrichtungen zur Fixierung des zumindest einen Schneidelements sind daher nicht nötig.

Der Klebstoff wird vorzugsweise Pressluft - gestützt aus einer Klebstoff-Kartusche aufgetragen.

Als Klebstoff kommen alle Arten von geeigneten ein- oder mehrkomponentigen Klebstoffen in Frage. Die Klebstoffe können sowohl chemisch, thermisch als auch mittels UV-Licht aushärtbar sein.

Weitere Vorteile ergeben sich aus der Zeichnung, die mehrere Ausführungsbeispiele der Erfindung darstellt.

Es zeigen:
- Fig. 1: eine Schnittansicht eines Stammblatts mit einem Schneidelement;
- Fig. 2a: eine Draufsicht auf ein Schneidelement;
- Fig. 2b: eine Draufsicht auf ein weiteres Schneidelement;
- Fig. 3: eine Schnittansicht eines weiteren Stammblatts mit einem weiteren Schneidelement;
- Fig. 4a: eine Draufsicht auf das Schneidelement aus Fig. 3;
- Fig. 4b: eine Schnittansicht eines weiteren Schneidelements;
- Fig. 5: eine geschnittene Ansicht eines weiteren Sägeblatts mit einem weiteren Schneidelement;
- Fig. 6a: eine Teilansicht eines Sägeblatts mit aneinanderstoßenden Schneidelementen ;
- Fig. 6b: eine Teilansicht eines Sägeblatts mit teilweise beabstandeten Schneidelementen ;
- Fig. 7: eine Teilansicht eines Sägeblatts mit unterschiedlich geformten Schneidelementen;
- Fig. 8: eine Draufsicht auf drei verschiedene, jeweils teilweise dargestellte Schneidelemente;
- Fig. 9a: eine Schnittansicht eines Schneidelements mit einseitig angeschliffener Schneide; und
- Fig. 9b: eine Schnittansicht eines Schneidelements mit beidseitig angeschliffener Schneide.

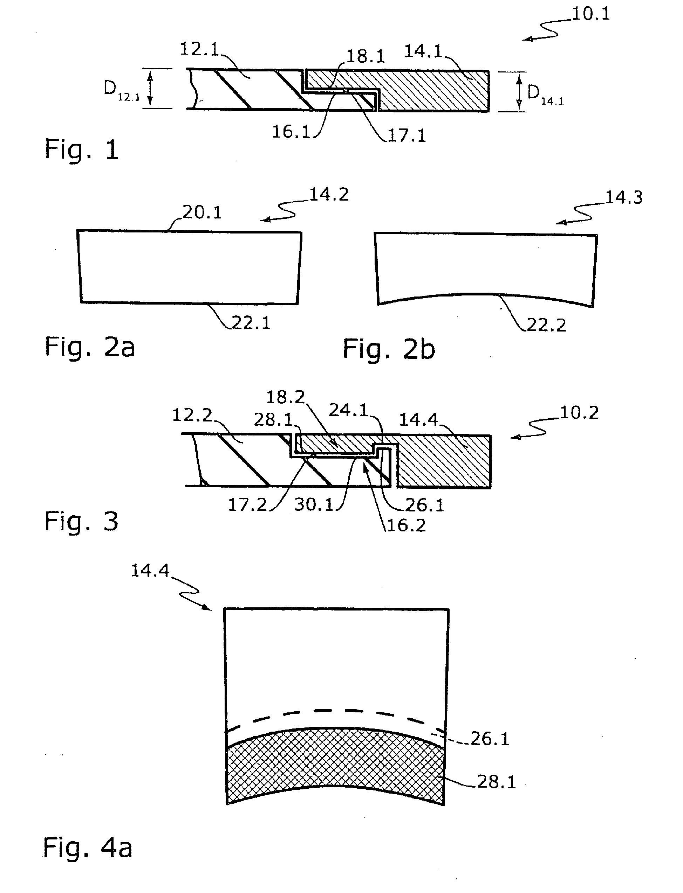

Fig. 1 zeigt ein erfindungsgemäßes Sägeblatt 10.1 mit einem kreisförmigen Stammblatt 12.1 und einem Schneidelement 14.1. Das Stammblatt 12.1 ist an einer Stammblattseitenfläche 16.1 durch eine Klebeverbindung 17.1 mit einer Schneidelementseitenfläche 18.1 verbunden. Das Stammblatt 12.1 kann aus Kunststoff oder Stahlblech gefertigt sein und ein- oder beidseitig eine Beschichtung aufweisen. Das Schneidelement 14.1 ist zur Bearbeitung von Baustoffen, insbesondere zur Bearbeitung von Dämmwerkstoffen oder zur Gesteinsbearbeitung ausgelegt und weist einen Messerschnitt auf. Das Schneidelement 14:1 besteht aus einem geeigneten Hartstoff, insbesondere aus Hartmetall, Cermet, Stahl oder einem der zuvor genannten Materialien in Verbindung mit einer Beschichtung durch ein PVD (physical vapour deposition) oder CVD (chemical vapour deposition) Verfahren. Das Schneidelement 14.1 kann auch mit einer Diamantbeschichtung versehen sein. In einem Bereich außerhalb des Bereichs der Klebeverbindung 17.1 ist die Dicke des Stammblatts D_{12.1} identisch mit der Dicke D_{14.1} des Schneidelements 14.1 außerhalb des Bereichs der Klebeverbindung 17.1. Weiterhin entspricht sowohl die Tiefe der Abstufung des Stammblatts 12.1 als auch die Tiefe der Abstufung des Schneidelements 14.1 der halben Stammblattdicke D_{12.1}. Das Sägeblatt 10.1 kann so besonders stabil ausgeführt werden. Die Gesamtdicke des Sägeblatts 10.1 entspricht über das gesamte Sägeblatt 10.1 gesehen der Stammblattdicke D_{12.1} bzw. der Schneidelementdicke D_{14.1}. Anstelle der in Fig. 1 gezeigten Ausführung kann die Schneidelementdicke D_{14.1} größer als die Stammblattdicke D_{12.1} sein. Das Schneidelement 14.1 kann so einseitig oder beidseitig über das Stammblatt 12.1 hinausragen. In jedem Fall kann das Sägeblatt 10.1 nicht nur mit dem Schneidelement 14.1 sondern auch mit dem Stammblatt 12.1 in das zu sägende Material (nicht gezeigt) eingeführt werden, da die Schnittbreite durch das Schneidelement 14.1 bestimmt wird und das Stammblatt 12.1 maximal die Dicke des Schneidelementes 14.1 aufweist.

Die Klebeverbindung 17.1 ist ringförmig zwischen dem Stammblatt 12.1 und dem Schneidelement 14.1 vorgesehen.

Fig. 2a zeigt eine Draufsicht auf ein Schneidelement 14.2. Die Oberseite 20.1 des Schneidelements 14.2 weist radial von einem Stammblatt (nicht gezeigt) weg. Die Oberseite 20.1 ist zum Sägen von Material geschliffen ausgebildet. Die der Oberseite 20.1 gegenüberliegende Unterseite 22.1 ist gerade ausgebildet.

Im Gegensatz dazu ist in Fig. 2b ein Schneidelement 14.3 dargestellt, dessen Unterseite 22.2 gebogen ausgebildet ist. Die Unterseite 22.2 kann dabei an den jeweiligen Durchmesser des Stammblatts angepasst sein.

Ein erfindungsgemäßes Sägeblatt 10.2 mit einer radialen Sicherung ist in Fig. 3 dargestellt. Das Sägeblatt 10.2 umfasst ein Stammblatt 12.2 und ein Schneidelement 14.4. Das Schneidelement 14.4 ist über eine Klebeverbindung 17.2 mit dem Stammblatt 12.2 verbunden. Zusätzlich zu der Klebeverbindung 17.2 ist das Schneidelement 14.4 mechanisch gegen ein "Abschleudern" von dem Stammblatt 12.2 beim Betrieb des Sägeblatts 10.2 gesichert. An einer Schneidelementseitenfläche 18.2 ist hierzu eine Schneidelementvertiefung 24.1 in Form einer Schneidelementnut ausgebildet, in die ein an der Stammblattseitenfläche 16.2 ausgebildeter Stammblattvorsprung 26.1 eingreift. Gleichzeitig greift ein Schneidelementvorsprung 28.1 in eine Stammblattvertiefung 30.1 in Form einer Stammblattnut ein.

Das Schneidelement 14.4 aus Fig. 3 ist in Fig. 4a in einer Draufsicht dargestellt. Der kariert eingezeichnete Schneidelementvorsprung 28.1 ist dabei durchgängig über das gesamte Schneidelement 14.4 in Form eines Ringabschnitts ausgebildet. Der Verlauf des Stammblattvorsprungs 26.1 ist gestrichelt angedeutet.

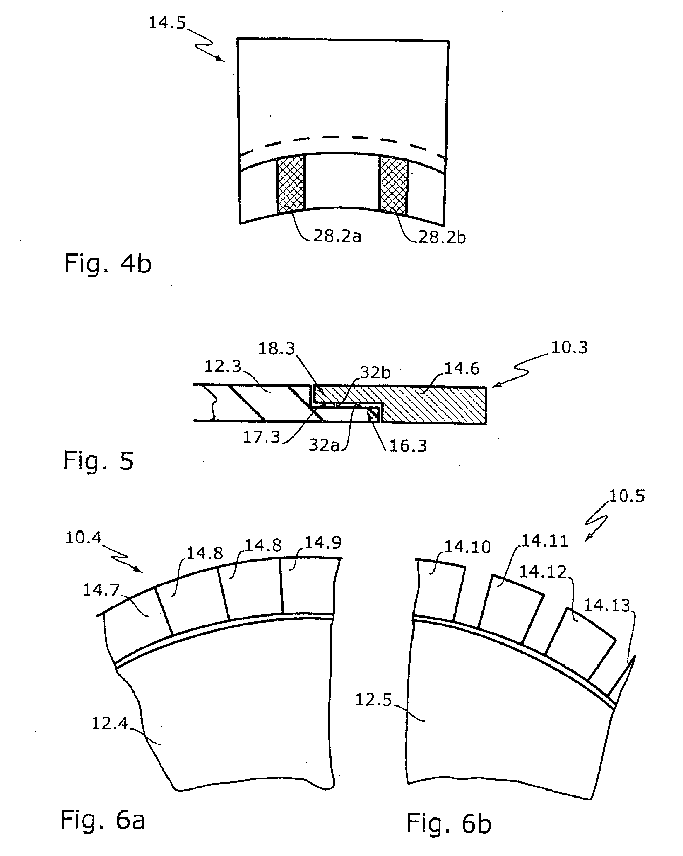

In Fig. 4b ist ein weiteres Schneidelement 14.5 dargestellt. Im Gegensatz zum Schneidelement 14.4 aus Fig. 4a weist das Schneidelement 14.5 zwei einzelne Schneidelementvorsprünge 28.2a, 28.2b auf. Es versteht sich dabei, dass auch nur ein einzelner Schneidelementvorsprung 28.2a bzw. 28.2b oder mehr als zwei Schneidelementvorsprünge 28.2a, 28.2b an dem Schneidelement 14.5 vorgesehen sein können.

In Fig. 5 ist eine Schnittansicht eines weiteren Sägeblatts 10.3 dargestellt. Zwischen einem Stammblatt 12.3 und einem Schneidelement 14.6 ist eine Klebeverbindung 17.3 vorgesehen. Ein erster Klebevorsprung 32a ist an einer Stammblattseitenfläche 16.3 angeordnet. Ferner ist ein zweiter Klebevorsprung 32b an einer Schneidelementseitenfläche 18.3 angeordnet. Die Höhe der Klebevorsprünge 32a, 32b beträgt 0,5 mm. Aus Gründen der Darstellbarkeit sind die Klebevorsprünge 32a, 32b in Fig. 5 stark vergrößert dargestellt. Die Klebevorsprünge 32a, 32b sind kreislinienförmig ausgebildet. Das aufgeklebte Schneidelement 14.6 liegt auf dem Klebevorsprung 32a, das Stammblatt 12.3 auf dem Klebevorsprung 32b des Schneidelements 14.6 auf. Die Klebeverbindung 17.3 erstreckt sich auf alle Bereiche seitlich der Klebevorsprünge 32a, 32b. Aufgrund der Distanzierung des Schneidelementes 14.6 von dem Stammblatt 12.3 durch die Klebevorsprünge 32a, 32b kann eine gleichmäßige Klebstoffdicke (nicht gezeigt) an der Klebeverbindung 17.3 erzielt werden. Die Klebevorsprünge 32a, 32b können bereits bei der Herstellung des Stammblatts 12.3 bzw. der Herstellung des Schneidelements 14.6 in diese mit eingebracht werden. Die Klebevorsprünge 32a, 32b können beispielsweise in einer bei der Herstellung des Stammblatts 12.3 und/oder des Schneidelements 14.6 eingesetzten Sinter- oder Gussform als Negativ enthalten sein. Neben kreislinienförmigen Ausgestaltungen der Klebevorsprünge 32a, 32b sind auch punktartige oder anders gestaltete geeignete Ausführungen möglich.

Fig. 6a zeigt eine Draufsicht auf einen Ausschnitt eines Sägeblatts 10.4. Das Sägeblatt 10.4 umfasst ein Stammblatt 12.4 sowie mehrere gleichmäßig angeordnete Schneidelemente, von denen vier Schneidelemente 14.7 - 14.9 dargestellt sind. Die Schneidelemente bilden einen geschlossenen Kreisring des Sägeblatts 10.4.

Im Gegensatz zu Fig. 6a zeigt Fig. 6b ein Sägeblatt 10.5 das mehrere Schneidelemente umfasst, von denen vier Schneidelemente 14.10 - 14.13 dargestellt sind, wobei die Schneidelemente 14.10 - 14.13 an einem Stammblatt 12.5 zueinander beabstandet angeordnet sind.

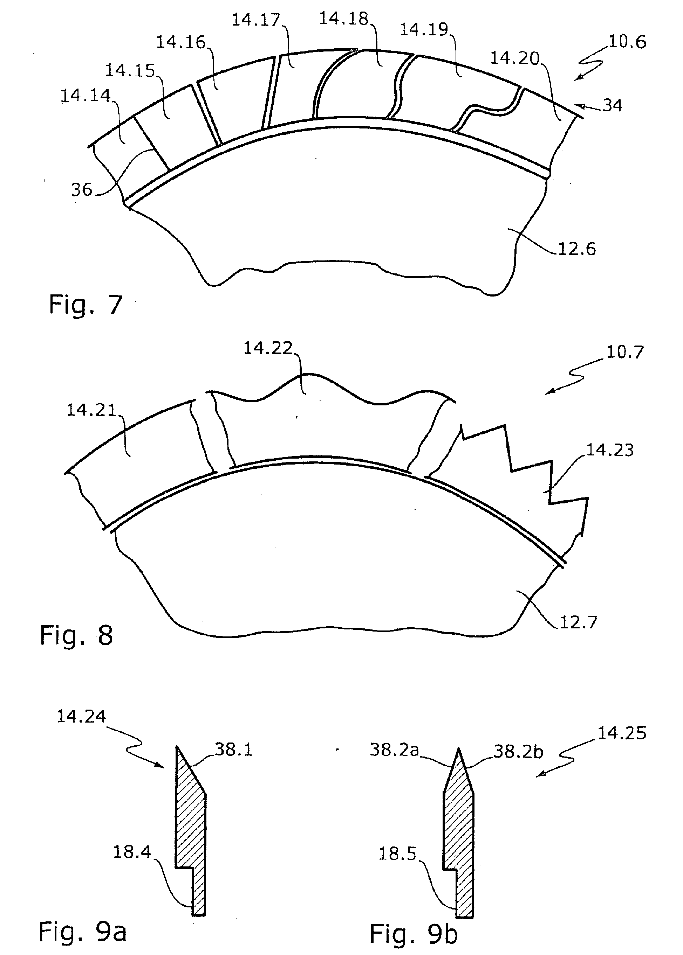

Ein weiteres Ausführungsbeispiel eines erfindungsgemäßen Sägeblatts 10.6 ist in Fig. 7 dargestellt. Das Sägeblatt 10.6 umfasst ein Stammblatt 12.6 und mehrere Schneidelemente 14.14 - 14.20. Die Darstellung der Schneidelemente 14.14 - 14.20 ist so zu verstehen, dass die Sägeblätter mit jeweils einer Art von Schneidelementen 14.14 - 14.20 versehen sind. Alternativ dazu können aber auch, wie in Fig. 7 gezeigt, unterschiedliche Schneidelemente 14.14 - 14.20 an einem einzigen Sägeblatt 10.6 vorgesehen sein. Die Schneidelemente 14.14 - 14.20 bilden nach außen hin eine Kreislinie 34. Der Grenzbereich zwischen den Schneidelementen 14.14 - 14.20 ist jeweils unterschiedlich ausgebildet. Aus Gründen der Übersichtlichkeit ist lediglich ein erster Grenzbereich 36 mit einem Bezugszeichen versehen. Die Schneidelemente 14.14 und 14.15 stoßen aneinander, weshalb der Grenzbereich 36 linienförmig dargestellt ist. Der Grenzbereich 36 ist radial zur Mitte des Stammblatts 12.6, d. h. zur Mitte des Sägeblatts 10.6 ausgerichtet. Die Schneidelemente 14.15, 14.16 weisen im gemeinsamen Grenzbereich gerade Seiten auf, die radial ausgerichtet sind. Die Seiten sind beabstandet, so dass im Grenzbereich eine Lücke ausgebildet ist. Zwischen den Schneidelementen 14.16 und 14.17 ist hingegen ein schräg zur radialen Richtung verlaufender Grenzbereich ausgebildet. Weiterhin kann ein gekrümmter Grenzbereich vorgesehen sein, wie dies beispielsweise zwischen den Schneidelementen 14.17 - 14.20 gezeigt ist. Der Abstand zwischen benachbarten Schneidelementen ist dabei vorzugsweise so gewählt, dass möglichst keine oder nur wenige Sägespäne in die Lücken zwischen die Schneidelemente 14.14 - 14.20 eindringen kann. Weiterhin können die Schneidelemente 14.14 - 14.20 sich gegenseitig überlappen bzw. ineinander eingefügt sein. Ferner können die Schneidelemente 14.14 - 14.20 ganzflächig Kontakt zueinander haben. Die Schneidelemente können weiterhin glatt profiliert, mit Nut- und Federformverzahnung oder auf andere Art so gestaltet sein, dass sie formschlüssig aneinander oder ineinander passen. Ferner können die Schneidelemente 14.14 - 14.20, in der Ebene des Sägeblatts 10.6 gesehen, in einem Winkel zur Sägeblattebene, vorzugsweise zwischen 10° und 45°, angeordnet sein.

Bei der Ausgestaltung als Dämmstoffsäge können die äußere Konturen der Schneidelemente 14.14 - 14.20 oder Teile davon so gestaltet sein, dass sich in Bezug auf die Schnittkräfte ein gleichmäßiger Anstieg oder Verlauf der Schnittkräfte einstellt und/oder dass sich durch die Formgestaltung eine Verschleißform mit langer Nutzungsdauer ergibt. So kann z. B. eine gegen die Drehrichtung gesehen ansteigende Kontur der umfänglichen Schneiden der Schneidelemente 14.14 - 14.20 vorgesehen sein. Hier sind gleichmäßig in Drehrichtung des Sägeblatts 10.6 gesehen sich wiederholende oder willkürlich zusammengesetzte Anordnungen oder Ausgestaltungen dieser Konturenverläufe möglich.

Fig. 8 zeigt ein erfindungsgemäßes Sägeblatt 10.7, das ein Stammblatt 12.7 sowie drei ausschnittsweise dargestellte Schneidelemente 14.21 - 14.23 umfasst. Das Schneidelement 14.22 weist dabei im Gegensatz zu dem Schneidelement 14.21 an seiner, dem Stammblatt 12.7 abgewandten Kontur eine Profilierung, das Schneidelement 14.23 eine spitze Form auf. Auf einem Schneidelement 14.21 - 14.23 können dabei ein oder mehrere Schneideformen in sich wiederholender Art angeordnet sein. Es können aber auch, wie in Fig. 8 dargestellt, Schneidelemente 14.21 - 14.23 mit unterschiedlich geformter äußerer Kontur in wechselnder Reihenfolge angeordnet sein, sodass Zahnfolgen unterschiedlicher Form und Höhe entstehen. Es können periodisch oder aperiodisch angeordnete Zahnformen in unterschiedlichen Reihenfolgen vorgesehen sein. Weiterhin können einzelne oder alle Schneidelemente 14.21 - 14.23 oder ein oder mehrere Teile eines Schneidelements 14.21 - 14.23 unterschiedliche Formen mit geraden, konkaven, konvexen oder daraus zusammengesetzten Konturen aufweisen. Die Kontur der Schneidelemente 14.21 - 14.22 kann dabei so gewählt werden, dass die Laufruhe der Säge erhöht wird. Je nach gewählter Kontur kann dabei verhindert werden, dass das Sägeblatt 10.7 bei der Bearbeitung von inhomogem Material in Schwingung versetzt wird. Hierdurch kann eine gleichmäßige Abnutzung der Schneidelemente 14.21 - 14.23 erreicht werden, wodurch die Standzeit des Sägeblatts 10.7 erhöht wird. Eine besonders hohe Laufruhe kann dabei im Falle des Schneidelements 14.22 erreicht werden.

Eine Schnittansicht eines weiteren Schneidelements 14.24 ist in Fig. 9a dargestellt. Das Schneidelement 14.24 kann an einer Schneidelementseitenfläche 18.4 an einem Stammblatt (nicht gezeigt) angeklebt werden. Das Schneidelement 14.24 weist eine einseitig geschliffene Schneide 38.1 auf. Die geschliffene Schneide 38.1 erzeugt eine, das zu sägende Material schneidende und spaltende Wirkung.

Eine weitere Ausgestaltung eines erfindungsgemäßen Schneidelements 14.25 ist in Fig. 9b gezeigt. Das Schneidelement 14.25 wird an seiner Schneidelementseitenfläche 18.5 an ein Stammblatt (nicht gezeigt) angeklebt. Im Gegensatz zu dem Schneidelement 14.24 aus Fig. 9a weist das Schneidelement 14.25 zwei geschliffene Schneiden 38.2a, 38.2b auf. Das Schneidelement 14.25 ist dadurch für die beidseitige Bearbeitung eines zu sägenden Materials ausgelegt.

## Patentansprüche

1. Sägeblatt (10.1 - 10.7) zum Sägen von Baustoffen mit zumindest einem Stammblatt (12.1 - 12.7) und einem Schneidelement (14.1 - 14.25), wobei das Schneidelement (14.1 - 14.25) durch eine Klebeverbindung-(17.1 - 17.3) am Stammblatt (12.1 - 12.7)
befestigt ist, wobei das Schneidelement (14.1 - 14.25) an einer
Schneidelementseitenfläche (18.1 - 18.5) mittels der Klebeverbindung (17.1 - 17.3) an einer Stammblattseitenfläche (16.1 - 16.3), insbesondere im Bereich des Umfangsrands des Stammblatts (12.1 - 12.7), aufgeklebt ist **dadurch gekennzeichnet, dass** die Stammblattseitenfläche (16.1 - 16.3) und/oder die
Schneidelementseitenfläche (18.1 - 18.5) im Bereich der Klebeverbindung (17.1 - 17.3) zumindest einen Klebevorsprung (32a, 32b) zur Ausbildung eines definierten Abstandes zwischen der Stammblattseitenfläche (16.1 - 16.3) und der Schneidelementseitenfläche (18.1 - 18.5) aufweist.

2. Sägeblatt nach Anspruch 1, **dadurch gekennzeichnet, dass** der Klebevorsprung (32a, 32b) eine Höhe zwischen 0,1 mm und 1,5 mm aufweist.

3. Sägeblatt nach Anspruch 1 oder 2, **dadurch gekennzeichnet, dass** insgesamt drei Klebevorsprünge im Bereich der Klebeverbindung vorgesehen sind.

4. Sägeblatt nach einem der vorhergehenden Ansprüche, **dadurch gekennzeichnet, dass** das Stammblatt (12.1 - 12.3) und/oder das Schneidelement (14.1, 14.4 - 14.6, 14.24, 14.25) im Bereich der Klebeverbindung (17.1 - 17.3) eine Abstufung aufweisen.

5. Sägeblatt nach Anspruch 4, **dadurch gekennzeichnet, dass** die Tiefe der Abstufung des Stammblatts (12.1, 12.3) im Bereich der Klebeverbindung (17.1, 17.3) der halben
Stammblattdicke (D_{12.1}) in einem Bereich außerhalb des Bereichs der Klebeverbindung (17.1, 17.3) entspricht und/oder die Tiefe der Abstufung des Schneidelements (14.1, 14.6) im Bereich der Klebeverbindung (17.1, 17.3) der halben Schneidelementdicke (D_{14.1}) in einem Bereich außerhalb des Bereichs der Klebeverbindung (17.1, 17.3) entspricht.

6. Sägeblatt nach einem der vorhergehenden Ansprüche, **dadurch gekennzeichnet, dass** die Stammblattdicke (D_{12.1}) der Schneidelementdicke (D_{14.1}) entspricht.

7. Sägeblatt nach einem der vorhergehenden Ansprüche, **dadurch gekennzeichnet, dass** an der Stammblattseitenfläche (16.2) zumindest eine Stammblattvertiefung (30.1) ausgebildet ist, in die ein an der Schneidelementseitenfläche (18.2) ausgebildeter Schneidelementvorsprung (28.1) eingreift und/oder an der Schneidelementseitenfläche (18.2) zumindest eine Schneidelementvertiefung (24.1) ausgebildet ist, in die ein an der Stammblattseitenfläche (18.2) ausgebildeter Stammblattvorsprung (26.1) eingreift.

8. Sägeblatt nach Anspruch 7, **dadurch gekennzeichnet, dass** die Schneidelementvertiefung (24.1) und/oder die Stammblattvertiefung (30.1) als Nut, insbesondere als durchgängige Ringnut, ausgebildet sind.

## Claims

1. Saw blade (10.1 - 10.7) for sawing building materials comprising at least one blade core (12.1 - 12.7) and a cutting element (14.1 - 14.25), wherein the cutting element (14.1 - 14.25) is fixed to the blade core (12.1 - 12.7) by means of an adhesive bond (17.1 - 17.3), wherein the cutting element (14.1 - 14.25) is bonded, on a lateral surface of the cutting element (18.1 - 18.5), to a lateral surface of the blade core (16.1 - 16.3), in particular in the region of the circumference of the blade core (12.1 - 12.7), by means of the adhesive bond (17.1 - 17.3), **characterised in that** the lateral surface of the blade core (16.1 - 16.3) and/or the lateral surface of the cutting element (18.1 - 18.5) possess at least one bonding projection (32a, 32b) in the region of the adhesive bond (17.1 - 17.3) serving to create a defined distance between the lateral surface of the blade core (16.1 - 16.3) and the lateral surface of the cutting element (18.1 - 18.5).

2. Saw blade according to claim 1, **characterised in that** the bonding projection (32a, 32b) has a height of between 0.1 mm and 1.5 mm.

3. Saw blade according to claim 1 or 2, **characterised in that** a total of three bonding projections are provided in the region of the adhesive bond.

4. Saw blade according to one of the preceding claims, **characterised in that** the blade core (12.1 - 12.3) and/or the cutting element (14.1, 14.4 - 14.6, 14.24, 14.25) possess a step in the region of the adhesive bond (17.1 - 17.3).

5. Saw blade according to claim 4, **characterised in that** the depth of the step of the blade core (12.1, 12.3) in the region of the adhesive bond (17.1, 17.3) corresponds to half the thickness of the blade core (D_{12.1}) in a region outside of the region of the adhesive bond (17.1, 17.3) and/or the depth of the step of the cutting element (14.1, 14.6) in the region of the adhesive bond (17.1, 17.3) corresponds to half the thickness of the cutting element (D_{14.1}) in a region outside of the region of the adhesive bond (17.1, 17.3).

6. Saw blade according to one of the preceding claims, **characterised in that** the thickness of the blade core (D_{12.1}) corresponds to the thickness of the cutting element (D_{14.1}) .

7. Saw blade according to one of the preceding claims, **characterised in that** at least one blade core recess (30.1) is formed on the lateral surface of the blade core (16.2) which interlocks with a cutting element projection (28.1) formed on the lateral surface of the cutting element (18.2) and/or at least one cutting element recess (24.1) is formed on the lateral surface of the cutting element (18.2) which interlocks with a blade core projection (26.1) formed on the lateral surface of the cutting element (18.2).

8. Saw blade according to claim 7, **characterised in that** the cutting element recess (24.1) and/or the blade core recess (30.1) are formed as a groove, in particular as a continuous annular groove.

## Revendications

1. Lame de scie (10.1-10.7) pour le sciage de matériaux de construction, comprenant au moins une lame de base (12.1-12.7) et un élément de coupe (14.1-14.25), dans laquelle l'élément de coupe (14.1-14.25) est fixé par une liaison adhésive (17.1-17.3) sur la lame de base (12.1-12.7), dans laquelle l'élément de coupe (14.1-14.25) est collé sur une surface latérale (18.1-18.5) de l'élément de coupe via la liaison adhésive (17.1-17.3) sur une surface latérale (16.1-16.3) de la lame de base, en particulier dans la zone du bord périphérique de la lame de base (12.1-12.7), **caractérisée en ce que** la surface latérale (16.1-16.3) de la lame de base et/ou la surface latérale (18.1-18.5) de l'élément de coupe présente (nt), dans la zone de la liaison adhésive (17.1-17.3), au moins une saillie d'adhésif (32a, 32b) pour former un écart défini entre la surface latérale (16.1-16.3) de la lame de base et la surface latérale (18.1-18.5) de l'élément de coupe.

2. Lame de scie selon la revendication 1, **caractérisée en ce que** la saillie d'adhésif (32a, 32b) présente une hauteur comprise entre 0,1 mm et 1,5 mm.

3. Lame de scie selon la revendication 1 ou la revendication 2, **caractérisée en ce qu'**il est prévu au total trois saillies d'adhésif dans la zone de la liaison adhésive.

4. Lame de scie selon l'une quelconque des revendications précédentes, **caractérisée en ce que** la lame de base (12.1-12.3) et/ou l'élément de coupe (14.1, 14.4-14.6, 14.24, 14.25) présente(nt) un gradin dans la zone de la liaison adhésive (17.1-17.3).

5. Lame de scie selon la revendication 4, **caractérisée en ce que** la profondeur du gradin de la lame de base (12.1, 12.3) dans la zone de la liaison adhésive (17.1, 17.3) correspond à la moitié de l'épaisseur (D_{12.1}) de la lame de base dans une zone extérieure à la zone de la liaison adhésive (17.1, 17.3) et/ou la profondeur du gradin de l'élément de coupe (14.1, 14.6) dans la zone de la liaison adhésive (17.1, 17.3) correspond à la moitié de l'épaisseur (D_{14.1}) de l'élément de coupe dans une zone extérieure à la zone de la liaison adhésive (17.1, 17.3).

6. Lame de scie selon l'une quelconque des revendications précédentes, **caractérisée en ce que** l'épaisseur (D_{12.1}) de la lame de base correspond à l'épaisseur (D_{14.1}) de l'élément de coupe.

7. Lame de scie selon l'une quelconque des revendications précédentes, **caractérisée en ce qu'**il est ménagé sur la surface latérale (16.2) de la lame de base au moins une cavité (30.1) de la lame de base, dans laquelle s'engage une saillie (28.1) de l'élément de coupe formée sur la surface latérale (18.2) de l'élément de coupe et/ou il est ménagé sur la surface latérale (18.2) de l'élément de coupe au moins une cavité (24.1) de l'élément de coupe, dans laquelle s'engage une saillie (26.1) de la lame de base formée sur la surface latérale (18.2) de celle-ci.

8. Lame de scie selon la revendication 7, **caractérisée en ce que** la cavité (24.1) de l'élément de coupe et/ou la cavité (30.1) de la lame de base sont conformées en rainure, en particulier en rainure annulaire continue.
